Europäisches Patentamt

European Patent Office

Office européen des brevets

(11) Veröffentlichungsnummer: **0 019 695**
**A1**

(19)

(12) **EUROPÄISCHE PATENTANMELDUNG**

(21) Anmeldenummer: 80101475.4

(22) Anmeldetag: 20.03.80

(51) Int. Cl.³: **H 02 H 7/085**

(30) Priorität: 31.05.79 DE 2922197

(43) Veröffentlichungstag der Anmeldung: 10.12.80
Patentblatt 80/25

(84) Benannte Vertragsstaaten: CH FR GB IT NL SE

(71) Anmelder: Richard Hirschmann Radiotechnisches Werk, Richard Hirschmann-Strasse 19, D-7300 Esslingen a.N. (DE)

(72) Erfinder: Pilz, Karl-Heinz, Dipl.-Ing., Buchenweg 34, D-7066 Baltmannsweiler II (DE)
Erfinder: Gräter, Wolfgang, Dipl.-Ing., Sulzerrainstrasse 19, D-7000 Stuttgart 50 (DE)
Erfinder: Mayer, Hans-Dietrich, Ing. grad., Schulstrasse 19, D-7066 Baltmannsweiler II (DE)

(74) Vertreter: Stadler, Heinz, Dipl.-Ing., Richard Hirschmann Radiotechnisches Werk Richard Hirschmann-Strasse 19, D-7300 Esslingen a.N. (DE)

(54) **Selbsttätige Überlast-Abschalteinrichtung für Gleichstrom-Motorantriebe.**

(57) Durch diese Einrichtung wird bei Überschreiten einer bestimmbaren Grenzbelastung des Antriebs — beispielsweise in den Endlagen oder bei durch unerwünschte Einflüsse verursachter zu starker Hemmung von Fahrzeugteleskopantennen oder elektrisch verstellbaren Fenstern, Schiebedächern o.ä. — der Motor (M) abgeschaltet und dadurch eine Beschädigung der Antriebsmittel oder der Motorwicklung durch zu starke Erwärmung vermieden.

Zwecks Erzielung maximaler Zuverlässigkeit der Abschaltung unter allen im Einzelfall möglichen Bedingungen und zur Vermeidung aufwendiger und kostspieliger mechanischer Konstruktionen bzw. elektrischer Einrichtungen ist eine Begrenzung des maximalen Drehmoments vorgesehen, wobei die dadurch bei Überbelastung des Antriebs bewirkte Absenkung der Motordrehzahl unter einen Grenzwert als Abschaltkriterium dient.

Besonders zweckmäßig ist es dabei, zur Drehmomentbegrenzung eine Strombegrenzungsschaltung ($T_9$, $T_{10}$, $R_0$, $R_{10}$ bzw. $T_4$, $T_5$, $R_0$, $R_4$) vorzusehen und den Grenzwert der Motordrehzahl durch einen entsprechenden Wert der proportional zu ihr absinkenden Gegen-EMK des Motors (M) zu indizieren.

**EP 0 019 695 A1**

- 1 -

<u>Selbsttätige Überlast-Abschalteinrichtung für Gleich-
strom-Motorantriebe</u>

Die Erfindung betrifft eine selbsttätige Überlast-
Abschalteinrichtung für Antriebe mit Gleichstrommotoren, vorzugsweise für Fahrzeug-Motorantennen.
Derartige Abschalteinrichtungen dienen dazu, bei Überschreiten einer bestimmbaren Grenzbelastung des Antriebs – beispielsweise in den Endlagen oder bei starker Hemmung von Fahrzeugteleskopantennen, Schiebedächern oder elektrisch verstellbaren Fenstern, Beschädigung der Antriebsmittel oder der Motorwicklung
durch zu starke Erwärmung zu vermeiden.
Sie sind aus Literatur und Praxis in vielen Ausführungsformen bekannt, die sich im wesentlichen in zwei
Gruppen einteilen lassen, nämlich solche, bei denen
die Größe der durch Hemmung bewirkten Gegenkraft direkt
auf mechanischem Wege die Abschaltung des Motors bewirkt und solche, bei denen als Abschaltkriterium der
Anstieg des Ankerstromes verwendet ist.
Zur ersten Gruppe gehören beispielsweise die aus der
DE-PS lo 79 133 und der DE-OS 25 12 791 bekannten
Überlast-Abschalteinrichtungen, bei denen im Falle der
Hemmung des Antriebs ein Schaltteil gegen Federkraft
bewegbar ist und bei einer bestimmten Hemmkraft soweit
aus der Ruhelage ausgelenkt wird, daß es einen Schaltkontakt zum Abschalten des Antriebsmotors betätigt.
Zu der genannten ersten Gruppe gehören auch Überlast-
Abschalteinrichtungen mit einer Rutschkupplung, welche
bei Hemmung des Antriebs in Gang gesetzt wird und,

- 2 -

z.B. durch einen umlaufenden Schaltnocken nach einer bestimmten Zeit bzw. Umdrehungszahl die Abschaltung des Antriebsmotors bewirkt.
Eine derartige Überlast-Abschaltung ist beispielsweise aus dem DE-Gbm 71 25 992 bekannt.

Alle diese mechanisch arbeitenden, kraftabhängigen Überlast-Abschalteinrichtungen weisen eine Anzahl von Nachteilen auf, welche die Eignung für ihren praktischen Einsatz zumindest einschränken und in manchen Fällen sogar in Frage stellen. Dazu gehören in erster Linie die aufwendige und damit teuere Konstruktion, der verhältnismäßig große Platzbedarf und die hohen Anforderungen an die Fertigungstoleranzen.
Außerdem ist die Zuverlässigkeit dieser bekannten Einrichtungen wegen des Verschleisses (auch der Schaltkontakte) durch Abnutzung und Korrosion stark beeinträchtigt. Die Justierung der Kontakte, sowie gegebenenfalls die Einstellung und der zur Erzielung normaler Betriebswerte nötige Einlauf der Rutschkupplung ergeben eine weitere Erhöhung der Herstellungskosten.

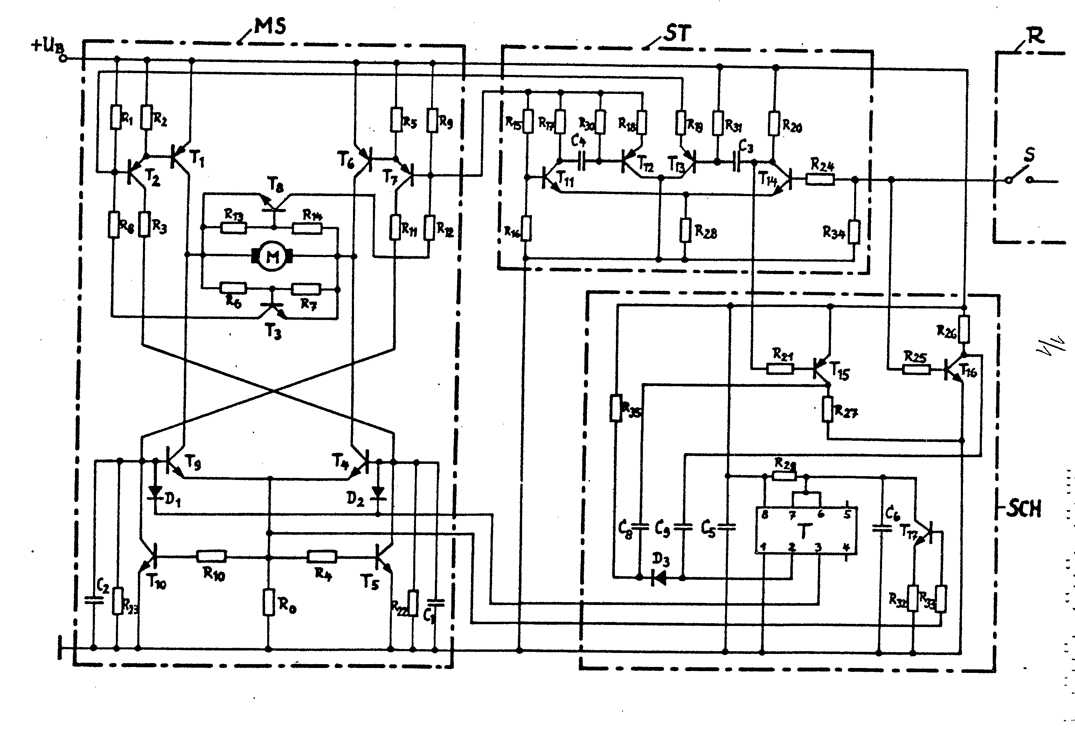

Eine Überlast-Abschalteinrichtung der genannten zweiten Art ist z.B. aus der DE-OS 2o o1 749 (siehe insbesondere Seite 5, vorletzter Absatz, sowie Fig. 1 und zugehörige Beschreibung auf Seite 7) bekannt, bei der eine bestimmte Änderung des Ankerstroms, bzw. der von ihm in einem angeschlossenen Widerstand erzeugten Spannung die Abschaltung des Motors bewirkt.
Bei derartigen Schaltungen sind zwar die aus dem mechanischen Aufbau resultierenden vorstehend beschriebenen Nachteile weitgehend vermieden, sie sind jedoch (besonders durch die Verwendung von Relais und Kontakten, die justiert werden müssen) immer noch verhältnismäßig

- 3 -

teuer und vor allem im praktischen Betrieb unzuverlässig.
Der zuletzt genannte, für die Verwendbarkeit besonders
schwerwiegende Mangel ergibt sich hauptsächlich aus dem
Funktionsprinzip, wonach die Änderung des Ankerstroms
(bzw. einer daraus abgeleiteten Spannung) als Abschaltkriterium dient, wodurch sowohl Fehlabschaltungen bei unschädlich niedrigen Strömen, als auch hohe Ströme ohne
Abschaltung und dadurch Beschädigungen des Motors möglich
sind.

Weiterhin ist das maximale Drehmoment des Antriebsmotors
nur durch dessen Kurzschlußstrom begrenzt, weshalb die
Motorwicklung für den normalen Arbeitsbereich in unwirtschaftlicher Weise überdimensioniert sein muß.
Schließlich wird eine, beim Gegenstand der DE-OS 2o o1 749
durch ein Zeitverzögerungsglied bewirkte Unterdrückung des
Einschaltstroms benötigt, da sonst der Motor unmittelbar
nach dem Einschalten bereits wieder abgeschaltet werden
würde. Damit ist der Aufwand dieser bekannten Abschalteinrichtung noch weiter vergrößert.

Der Erfindung liegt die Aufgabe zugrunde, eine Überlast-Abschalteinrichtung nach dem Oberbegriff des Anspruches 1
zu schaffen, die unter Vermeidung der geschilderten Nachteile mit möglichst geringem Aufwand eine dauerhaft sicher
funktionierende Motorabschaltung bewirkt, wenn die Hemmung
des Antriebs eine bestimmte Größe überschreitet.

Diese Aufgabe ist dadurch gelöst, daß eine Begrenzung des
maximalen Motordrehmomentes vorgesehen ist und die dadurch bei Überbelastung des Antriebs bewirkte Absenkung
der Motordrehzahl unter einen Grenzwert als Abschaltkriterium dient.

Durch die Begrenzung des maximalen Motordrehmoments und
damit unmittelbar auch des maximalen Ankerstroms ist auf

- 4 -

ebenso einfache wie wirkungsvolle Weise der Antrieb und die Motorwicklung absolut überlastungssicher. Im Gegensatz zum Stand der Technik braucht auch kein kurzschlußfester Motor verwendet und die Motorwicklung nur für den festgelegten maximalen Ankerstrom ausgelegt zu werden, wodurch eine beträchtliche Kostensenkung erreicht ist. Außerdem besteht bei der erfindungsgemäßen Überlast-Abschalteinrichtung im Gegensatz zu der aus der DE-OS 2o o1 745 bekannten keine Notwendigkeit, den Motor bei Auftreten einer zu starken Hemmung schnellstmöglich abzuschalten.

Diese Tatsache ermöglicht es, gemäß dem zweiten kennzeichnenden Merkmal des Hauptanspruches für das Abschaltkriterium eine andere Größe zu wählen, als für die Sicherheit. Dadurch ist ohne zusätzlichen Aufwand der weitere Vorteil erreicht, daß bei kurzzeitigen Störungen, deren Dauer geringer ist als die Zeitspanne des Absinkens der Drehzahl vom ungestörten Lauf bis zur Abschaltgrenze, der Antrieb ohne Überlastung und nach Beendigung der Hemmung wieder mit voller Drehzahl bis zur Endstellung des zu bewegenden Objektes weiterläuft.

Bei einer länger dauernden, zu starken Hemmung erfolgt dagegen in erwünschter Weise die Abschaltung des Motors. Dabei kann die Hemmung und damit das Ansteigen des Ankerstroms auch schleichend (z.B. durch langsames Verschmutzen des Antriebs) erfolgen.

Da die Überlastsicherung und die Abschaltung elektronisch erfolgen, ist der mechanische Aufwand gegenüber den bekannten Überlast-Abschalteinrichtungen der ersten beschriebenen Art erheblich geringer. Der Erfindungsgegenstand ist damit einfacher, kostengünstiger und zuverlässiger in der Funktion.

Zweckmäßige Ausgestaltungen des Gegenstandes des Hauptanspruches sind den Unteransprüchen zu entnehmen.

- 5 -

Eine gemäß Anspruch 2 auf elektronischem Wege bewirkte Drehmomentbegrenzung benötigt einen minimalen mechanischen und konstruktiven Aufwand, ist zur Herstellung als integrierte Schaltung und für die Mengenfertigung geeignet und stellt somit eine räumlich und kostenmäßig optimal günstige Lösung dar. Außerdem weist eine derartige Schaltung keine Alterungserscheinungen durch Verschmutzung, Korrosion oder sonstige Witterungseinflüsse auf, da sie vollständig in einem geschützten Gehäuse angeordnet werden kann. Durch die elektronische Erzeugung der Drehmomentbegrenzung besteht für die restliche Antriebsmechanik große Freiheit in der Wahl des Materials, sodaß auch für diesen Teil der Einrichtung die Möglichkeit besteht, den Verschleiß minimal zu halten. Insgesamt zeichnet sich damit der Erfindungsgegenstand durch größtmögliche Zuverlässigkeit aus.

Schließlich ist eine Ausführung des Erfindungsgegenstandes nach Anspruch 2 auch besonders gut geeignet für den Einsatz in Kraftfahrzeugen mit einem sogenannten Steuerbus.

Denkbare andere Maßnahmen zur Drehmomentbegrenzung, beispielsweise durch Wahl einer geeigneten Motorkennlinie (großer Ankerwiderstand) weisen die aufgezählten Vorteile nur teilweise auf. Bei dem genannten Beispiel ist darüber hinaus der Motorwirkungsgrad gering.

Die Indizierung der Grenzdrehzahl, bei der der Motor abgeschaltet werden soll, durch die Gegen-EMK des Motors entsprechend Anspruch 3 ergibt eine besonders zweckmäßige Schaltung, weil dabei der sowieso vorhandene Motor als Drehzahlgeber mitbenutzt wird. Allerdings ist dabei eine Starthilfeschaltung nötig, da bei Motorstillstand keine die Einschaltung bewirkende Gegen-EMK zur Verfügung steht. Dafür bietet sich als besonders einfache und sicher funktionierende Schaltung eine Ausführung nach Anspruch 4

- 6 -

an, wobei die Halteschaltung eine sinnvolle Ergänzung hinsichtlich einer optimalen Motorsteuerung darstellt. Durch die in Anspruch 5 vorgeschlagene Mitbenutzung der für die Drehrichtungsumkehr vorgesehenen Schaltung zum Umschalten der Kondensatoren der Starthilfeschaltung sind in vorteilhafter Weise Bauteile eingespart. Die Ansteuerung der Kondensatoren der Starthilfeschaltung über je einen Transistor gemäß Anspruch 6 ist in vorteilhafter Weise zugleich preisgünstig und zuverlässig. Durch die Zusammenschaltung der beiden Transistoren als Komparator ist darüber hinaus ein sicheres Einfahren einer Fahrzeug-Teleskopantenne beim Abschalten des Rundfunkempfängers auch dann gewährleistet, wenn durch einen darin enthaltenen Kondensator hoher Kapazität die Versorgungsspannung nur langsam absinkt, weil beim Erreichen einer bestimmten einstellbaren Spannung die Transistoren sprunghaft und gegenläufig vom leitenden in den gesperrten Zustand bzw. umgekehrt wechseln und dadurch einen für den Anlauf des Motors benötigten Impuls erzeugen. Bei unterbrochenem Kraftschluß zwischen Antrieb und zu bewegendem Objekt (Leerlauf), z.B. durch einen Bruch des Schubmittels, würde der Motor bis zum Abschalten von Hand weiterlaufen.

Bei vielen Fahrzeug-Motorantennen wird zum Wechsel des Teleskops dieses nach Lösen der Befestigung mitsamt dem Schubmittel aus dem Gehäuse herausgezogen. In diesen Fällen läuft der Motor auch nach dem Abschalten des Empfängers - dann allerdings in umgekehrter Drehrichtung - weiter. Derartige unerwünschte Erscheinungen sind durch eine Schutzschaltung nach Anspruch 7 wirksam verhindert.

In den Ansprüchen 8 - 10 sind weitere vorteilhafte Möglichkeiten zur Indizierung der Abschaltdrehzahl angegeben, wobei unter dem Gesichtspunkt der Zuverlässigkeit die Ausge-

- 7 -

staltung gemäß Anspruch 2 am höchsten zu bewerten ist. Allen gemeinsam ist dagegen der Vorteil, daß neben der Drehzahlerkennung auch eine unmittelbare Bestimmung des von dem betreffenden Objekt zurückgelegten Weges durchgeführt werden kann, weil er proportional zur Anzahl der gemessenen Impulse ist. Diese Eigenschaft kann in einfacher Weise dazu benutzt werden, die Zwangsabschaltung bei Leerlauf zu steuern, sodaß bei Einsatz derartiger Indikatoren auf die vorstehend angeführte Schutzschaltung verzichtet werden kann. Dabei muß kein zeitlicher Sicherheitsabstand eingehalten werden, es genügt vielmehr, die Abschaltung unmittelbar nach Überschreiten der Impulszahl für maximale Bewegungslänge (z.B. Ausfahrlänge eines Antennenteleskops) zu veranlassen.

Darüber hinaus ist der Vorteil gegeben, daß auf einfache Weise auch eine beliebige Zahl von Zwischenstufen der maximalen Betätigungsweglänge programmierbar ist. Eine derartige Einrichtung ist für die Praxis von weitreichender Bedeutung, weil für die genannten Zwischenstellungen ein großes Bedürfnis vorhanden ist, sei es bei Fahrzeugantennen, die im Nahbereich von Sendern nicht voll ausgefahren werden sollen, oder auch bei Fahrzeugschiebedächern bzw. - Fenstern, für deren Öffnen mehr Zwischenstufen erwünscht sind.

Die Figur zeigt das Schaltbild eines Ausführungsbeispiels der erfindungsgemäßen Überlast-Abschalteinrichtung. Darin ist mit R der Rundfunkempfänger, mit ST die Starthilfeschaltung, mit SCH die Schutzschaltung und mit MS die Motorsteuerungseinheit bezeichnet, welche die Halteschaltung, sowie die Schaltungen zur Strombegrenzung und Drehrichtungsumkehr enthält.

Für die Funktionsbeschreibung sei davon ausgegangen, daß die Betriebsspannung $U_B$ an die Schaltung angelegt und der Rundfunkempfänger R abgeschaltet, der Schalter S somit

- 9 -

geöffnet ist. Dann sind bis auf den Transistor $T_{11}$ alle Transistoren gesperrt. Damit wird der Kondensator $C_9$ über den Widerstand $R_{26}$ und der Kondensator $C_8$ mit entgegengesetzter Polung über die Widerstände $R_{27}$ und $R_{35}$ aufgeladen. Der als handelsüblicher IC aufgebaute Timer T ist bei dieser Konstellation nicht aktiviert, sein Ausgang 3 liegt auf 0 und sperrt somit über die Dioden $D_1$ und $D_2$ die Transistoren $T_4$ und $T_9$. Die Schaltung befindet sich insgesamt in stabilem Zustand.

Durch Schließen des Schalters S beim Einschalten des Rundfunkempfängers R (Anlegen der Betriebsspannung $U_B$) öffnet der Transistor $T_{16}$ der Schutzschaltung SCH. Dadurch wird der Kondensator $C_9$ entladen und liefert einen Impuls, dessen negative Flanke den Timer T triggert, womit über dessen Ausgang 3 und die Dioden $D_1$, $D_2$ die Basen der Transistoren $T_4$, $T_9$ freigegeben werden. Außerdem wird der Kondensator $C_6$ des für eine Zeitkonstante von etwa 20 sec bemessenen Zeitgliedes $R_{29}/C_6$ aufgeladen. Der Transistor $T_{15}$ schaltet mit dem Transistor $T_{14}$ durch, sodaß der Kondensator $C_6$ über den Widerstand $R_{35}$ entladen wird.

Die Diode $D_3$, sowie die Kollektor-Emitter-Strecke des Transistors $T_{16}$ stellen eine "Oder"-Schaltung dar, die eine unabhängige Triggerung des Timers T einmal durch den Transistor $T_{16}$ (beim Einschalten) und zum anderen des Transitors $T_{15}$ (beim Ausschalten) gewährleisten. Der Kondensator $C_5$ ist als Glättungskondensator vorgesehen, der verhindert, daß Spannungssprünge (z.B. beim Einschalten von Verbrauchern im Fahrzeug)Fehlfunktionen des Timers T verursachen.

Zugleich wird, wie bereits erwähnt, durch das Schließen des Schalters S der Transistor $T_{14}$ durchgesteuert (und damit $T_{11}$ gesperrt), der Kondensator $C_3$ aufgeladen und während der impulsförmig verlaufenden Ladezeit der Transistor $T_{13}$ ebenfalls leitend.

0019695

- 9 -

Der durch diesen über den Widerstand $R_{19}$ fließende Anlaufstrom steuert die Basis des Transistors $T_2$ durch, womit auch der Transistor $T_1$ öffnet, sodaß ein Stromfluß über den Motor M, den Transistor $T_4$ sowie den Widerstand $R_0$ erfolgt und der Motor M anläuft. Dabei baut sich an diesem eine Spannung auf, welche sich aus dem Spannungsabfall an der Kupferwicklung und den Kohlebürsten, sowie der Gegen-EMK zusammensetzt. Sie erzeugt einen Strom durch die Spannungsteilerwiderstände $R_6$, $R_7$, der den Transistor $T_3$ aufsteuert und über den Widerstand $R_8$ den Transistor $T_2$ offen hält. Die Länge des Durchschaltimpulses für den Transistor $T_{13}$ und damit die Zeitdauer des von der Starthilfeschaltung ST gelieferten Anlaufstroms ist durch die Zeitkonstante des aus den Widerständen $R_{28}$, $R_{31}$ und dem Eingangswiderstand des Transistors $T_{13}$, sowie dem Kondensator $C_3$ gebildeten RC-Gliedes bestimmt und so bemessen, daß sie mit Sicherheit die Zeitdauer bis zu dem durch die Halteschaltung $R_6$, $R_7$, $R_8$, $T_2$, $T_3$ bewirkten Durchschalten des Transistors $T_2$ übersteigt. Dabei kann wegen des hohen Eingangswiderstandes des in Kollektorschaltung betriebenen Transistors $T_{13}$ für den Kondensator $C_3$ in kostensparender Weise eine Ausführung mit kleiner Kapazität eingesetzt werden.

Die Transistoren $T_{11}$ und $T_{14}$ der Starthilfeschaltung ST sind als Komparator zusammengeschaltet. Dadurch ist in vorteilhafter Weise das Einfahren der Antenne beim Ausschalten des Rundfunkempfängers R auch dann sicher gewährleistet, wenn das Absinken der Versorgungsspannung beim Öffnen des Schalters S nicht impulsförmig erfolgt, sondern wegen eines im Rundfunkempfänger R enthaltenen Kondensators großer Kapazität nur langsam. In diesem Falle sorgt die Komparator-Schaltung in der Weise für den nötigen Impuls zum Aufsteuern des Transistors $T_{12}$ und damit zum Auslösen des Anlaufstromes, daß der Transistor $T_{11}$ sprunghaft in den leitenden und der

Transistor $T_{14}$ in den gesperrten Zustand übergeht, wenn dessen Basispotential dasjenige des Transistors $T_{11}$ unterschreitet. Tritt nun eine Hemmung des Motors M ein, so steigt dessen Drehmoment und damit der Ankerstrom an, die Drehzahl fällt ab. Ist die Hemmung so gering, daß das maximale Drehmoment nicht erreicht wird, so läuft der Motor M weiter und die Drehzahl, sowie der Ankerstrom und das Motordrehmoment erreichen nach Beseitigung der Hemmung wieder ihre Sollwerte. Überschreitet die Hemmkraft indessen einen bestimmten Wert, so steigt das Motordrehmoment bis zu dem durch den Höchstwert des Ankerstromes, der durch entsprechende Dimensionierung der Begrenzerschaltung $R_0$, $R_4$, $T_4$, $T_5$ erreicht wird, bestimmten vorgegebenen Maximalwert an und die Drehzahl geht auf Null zurück. Der durch die Transistoren $T_4$, $T_5$ fließende eingeprägte Maximalstrom ruft am Ankerwiderstand des Motors M eine Spannung hervor, die durch entsprechende Dimensionierung der Widerstände $R_6$ und $R_7$ zu klein ist, um ein Durchsteuern der Transistoren $T_3$ und damit auch $T_2$ zu bewirken. Die Stromversorgung des Motors M ist somit abgeschaltet. Durch den plötzlichen Stromabfall im Motor M wird ein kurzer Gegenspannungsimpuls induziert, der den Transistor $T_6$ und damit auch die Transistoren $T_7$, $T_8$ und $T_9$ aufsteuert. Dieses unerwünschte Umpolen des Motors wird jedoch durch den Kondensator $C_2$ wirksam verhindert, dessen Aufladezeit entsprechend kurz bemessen ist.

Die Schutzschaltung SCH ist vor allem dafür vorgesehen, den Motor M dann abzuschalten, wenn er durch unterbrochenen Kraftschluß zwischen Antrieb und Teleskopantenne, z.B. durch einen Bruch des Schubseils oder beim Auswechseln von Antennenteleskopen, bei dem diese mitsamt dem Schubseil aus dem Antennengehäuse herausgezogen werden, so lange im Leerlauf weiterlaufen würde bis er von Hand abgeschaltet wird. Die Schutzschaltung SCH des vorliegenden Ausführungsbeispiels wird darüber hinaus bei jeder Abschaltung des Motors M durch Sperren der Transistoren $T_4$ und $T_9$ wirksam.

- 11 -

Dabei wird unabhängig von der Ursache der Abschaltung (zu starke Hemmung, Erreichen der Antennenendstellung oder Umpolung beim Start bzw. während des Laufes durch Betätigung des Schalters S) am Widerstand $R_0$ eine Spannung aufgebaut, die den Transistor $T_{17}$ durchschaltet und dafür sorgt, daß der Kondensator $C_6$ über den Widerstand $R_{32}$ entladen wird.

Dadurch ist der Vorteil erreicht, daß nach jedem Schaltvorgang wieder die gesamte Zeitdauer von etwa 20 sec für die Schutzschaltung zur Verfügung steht.

Wird nun durch Öffnen des Schalters der Rundfunkempfänger R ausgeschaltet, so werden die Transistoren $T_{16}$ und mit $T_{14}$ auch $T_{15}$ gesperrt. Dadurch erfolgt Aufladung des Kondensators $C_9$ und mit entgegengesetzter Polung des Kondensators $C_8$, wobei die negative Flanke des Aufladeimpulses den Timer T triggert und somit die Basen der Transistoren $T_4$ und $T_9$ freigegeben sind. Zugleich mit dem Sperren des Transistors $T_{14}$ wird der Transistor $T_{11}$ leitend und der zuvor entladene Kondensator $C_4$ geladen. Durch den Ladeimpuls werden der Transistor $T_{12}$ und damit auch die Transistoren $T_7$, $T_6$ und $T_9$ durchgeschaltet. Somit fließt ein Strom über $T_6$, M, $T_9$ und $R_0$ nach Masse. Der Motor M läuft jetzt in entgegengesetzter Drehrichtung, die Antenne wird also eingefahren. Dabei bewirkt auch hier wieder eine Halteschaltung, die aus den Widerständen $R_{12}$, $R_{13}$ und $R_{14}$, sowie den Transistoren $T_7$ und $T_8$ besteht und in analoger Weise zu der Halteschaltung für die andere Drehrichtung wirkt, für den Weiterlauf des Motors M nach Abklingen des Anlaufimpulses.

Bei Hemmung des Motors M wird jetzt in analoger Weise zu der bereits beschriebenen die aus $R_C$, $R_{10}$, $T_9$, $T_{10}$ bestehende Strombegrenzungsschaltung wirksam. Bei entsprechend starker Hemmung, z.B. in der Endlage des Teleskops, wird der Motor abgeschaltet und gelangt zum Still-

- 12 -

stand. Der Kondensator $C_1$ verhindert dabei in der bereits für den Kondensator $C_2$ geschilderten Weise ein unerwünschtes Umpolen des Motors M. Die Schaltung geht insgesamt wieder auf den eingangs beschriebenen stabilen Ausgangszustand zurück.

Die Widerstände, deren Wirkungsweise vorstehend nicht beschrieben ist, dienen lediglich in bekannter Weise zur Arbeitspunkteinstellung bzw. Strombegrenzung der zugehörigen Transistoren.

Patentansprüche

1. Selbsttätige Überlast-Abschalteinrichtung für Antriebe mit Gleichstrommotoren, vorzugsweise für Fahrzeug-Motorantennen, dadurch gekennzeichnet, daß eine Begrenzung des maximalen Motordrehmomentes vorgesehen ist und die dadurch bei Überbelastung des Antriebs bewirkte Absenkung der Motordrehzahl unter einen Grenzwert als Abschaltkriterium dient.

2. Selbsttätige Überlast-Abschalteinrichtung nach Anspruch 1, dadurch gekennzeichnet, daß die Drehmomentbegrenzung auf elektronischem Wege, vorzugsweise durch eine Strombegrenzungsschaltung ($T_9$, $T_{10}$, $R_0$, $R_{10}$, bzw. $T_4$, $T_5$, $R_0$, $R_4$) bewirkt ist, deren maximaler Strom den Höchstwert des Ankerstromes bildet.

3. Selbsttätige Überlast-Abschalteinrichtung nach Anspruch 1 oder 2, dadurch gekennzeichnet, daß der Grenzwert der Motordrehzahl durch einen entsprechenden Wert der proportional zu ihr absinkenden Gegen-EMK des Motors (M) indiziert ist, dessen Erreichen und/oder Unterschreiten die Abschaltung des Motors (M) unmittelbar auslöst, daß eine Starthilfeschaltung (ST) vorgesehen ist, die beim Einschalten des stillstehenden Motors (M) einen ausreichend hohen Anlaufstrom liefert, und daß eine Halteschaltung ($R_6$, $R_7$, $R_8$, $T_2$, $T_3$ bzw. $R_{12}$, $R_{13}$, $R_{14}$, $T_7$, $T_8$) den Betriebszustand des Motors nach Überschreiten des Grenzwertes der Motordrehzahl selbsttätig aufrecht erhält.

4. Selbsttätige Überlast-Abschalteinrichtung nach Anspruch 3, dadurch gekennzeichnet, daß die Starthilfeschaltung (ST) zwei Kondensatoren ($C_3$, $C_4$) aufweist, von denen abwechselnd einer aufgeladen und der andere entladen wird und daß beim Einschalten des Antriebs der Ladestrom des aufzuladenden Kondensators den Stromweg für den Anlaufstrom solange aufsteuert bis er durch die Halteschaltung ($R_6$, $R_7$, $R_8$, $T_2$, $T_3$ bzw. $R_{12}$, $R_{13}$, $R_{14}$, $T_7$, $T_8$) offen bleibt.

5. Selbsttätige Überlast-Abschalteinrichtung nach Anspruch 4, dadurch gekennzeichnet, daß zur Umpolung des Motors (M) für die Drehrichtungsumkehr beim Ein- und Ausschalten ein Relais bzw. eine entsprechend wirkende elektronische Schaltung vorgesehen ist, das bzw. die zugleich die Umschaltung der Kondensatoren der Starthilfeschaltung bewirkt.

6. Selbsttätige Überlast-Abschalteinrichtung nach Anspruch 4, dadurch gekennzeichnet, daß die beiden Kondensatoren ($C_3$, $C_4$) über Transistoren ($T_{14}$, $T_{11}$) angesteuert werden, die vorzugsweise als Komparator zusammengeschaltet sind.

7. Selbsttätige Überlast-Abschalteinrichtung nach einem der Ansprüche 1 - 6, dadurch gekennzeichnet, daß eine Schutzschaltung (Sch) vorgesehen ist, die nach jedem Schaltvorgang nach Ablauf einer einstellbaren, die normale Arbeitsdauer des Motors (M) je Arbeitsgang mit Sicherheit übersteigenden Zeit dessen Abschaltung bewirkt.

8. Selbsttätige Überlast-Abschalteinrichtung nach einem der Ansprüche 1 - 7, dadurch gekennzeichnet, daß der Grenzwert der Motordrehzahl durch im Magnetkreis des Motors (M) liegende magnetempfindliche Fühler, vorzugsweise Feldplatten, ermittelt ist.

9. Selbsttätige Überlast-Abschalteinrichtung nach einem der Ansprüche 1 - 7, dadurch gekennzeichnet, daß der Grenzwert der Motordrehzahl durch optoelektronische Drehzahlmessung ermittelt ist.

lo. Selbsttätige Überlast-Abschalteinrichtung nach einem der Ansprüche 1 - 7, dadurch gekennzeichnet, daß der Grenzwert der Motordrehzahl durch Zählung der Kommutatorimpulse mittels einer elektronischen Zähleinrichtung ermittelt ist.

MS   ST   R

+U_B   S

R_1 R_2   R_5 R_9   R_{15} R_{17} R_{30} R_{18} R_{19} R_{31} R_{20}

T_1   T_6   C_4   T_{12} T_{13}   C_3   R_{24}

T_2   T_7   T_{11}   T_{14}

R_8 R_3   T_8   R_{11} R_{12}   R_{16}   R_{28}   R_{34}

R_{13}   R_{14}

M   R_{26}

R_6   R_7   R_{21}   T_{15}   R_{25} T_{16}

T_3   R_{35}   R_{27}

T_9   T_4   R_{29}

D_1   D_2   C_8 C_9 C_5   T   C_6 T_{17}

8 7 6 5

1 2 3 4

T_{10}   R_{10}   R_4   T_5   D_3

C_2 R_{23}   R_0   R_{22} C_1   R_{32} R_{33}

SCH

1/1

00.19.695

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - B - 1 225 832 (SIEMENS-SCHUCKERT-WERKE) <br> * Spalten 1, 2; Fig. * <br> -- | <br> 1;2 |
| | DE - B2 - 1 907 774 (AGFA-GEVAERT) <br> * Spalte 4, Zeilen 26 bis 43; Fig. * <br> -- | <br> 3 |
| | GB - A - 1 254 640 (VEB BANDSTAHL-KOMBINAT) <br> * Seite 1, Zeilen 11 bis 30; Fig. 1 * <br> -- | <br><br> 9,10 |
| A | DE - B2 - 2 361 645 (PIONEER ELECTRONIC CORP.) <br> * Spalte 2, Zeile 60 bis Spalte 4, Zeile 20; Fig. * <br> -- | <br><br> 8 |
| A,D | DE - A - 2 001 745 (R. HIRSCHMANN RADIOTECHNISCHES WERK) <br> * Ansprüche 1, 2; Seite 5 * <br> ---- | |

### KLASSIFIKATION DER ANMELDUNG (Int.Cl.³)

H 02 H    7/085

### RECHERCHIERTE SACHGEBIETE (Int. Cl.³)

H 02 H    7/08
H 02 H    7/085
H 02 P    7/00

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 11-09-1980 | LEMMERICH |

EPA form 1503.1   06.78